Europäisches Patentamt

European Patent Office

Office européen des brevets

(19)

(11)  EP 0 846 483 B1

(12)  **FASCICULE DE BREVET EUROPEEN**

(45) Date de publication et mention
de la délivrance du brevet:
**02.05.2003  Bulletin 2003/18**

(51) Int Cl.⁷: **B01D 15/02**

(21) Numéro de dépôt: **97402903.5**

(22) Date de dépôt: **02.12.1997**

(54) **Dispositif de rinçage dans une unité d'adsorption en lit mobile simulé comprenant deux lignes de distribution de fluides et son utilisation**

Spülungsvorrichtung in einer Adsorbtionseinheit eines simulierten Wanderbettes, die zwei Leitungen zur Verteilung der Fluiden enthält und ihre Anwendung

Flushing device in a simulated moving bed adsorption unit comprising two distribution lines for fluids and its use

(84) Etats contractants désignés:
**DE ES GB IT NL**

(30) Priorité: **05.12.1996  FR 9615071**

(43) Date de publication de la demande:
**10.06.1998  Bulletin 1998/24**

(73) Titulaire: **INSTITUT FRANCAIS DU PETROLE
92852 Rueil-Malmaison Cedex (FR)**

(72) Inventeur: **Hotier, Gérard
92500 Rueil Malmaison (FR)**

(56) Documents cités:
**WO-A-96/12542          US-A- 3 201 491
US-A- 3 268 605**

## Description

L'invention concerne un dispositif de rinçage dans une unité d'adsorption en lit mobile simulé, à contre-courant ou à co-courant, d'une charge et son utilisation.

Elle s'applique particulièrement à la séparation des hydrocarbures aromatiques à 8 atomes de carbone, notamment pour l'obtention de paraxylène à très haute pureté.

L'arrière plan technologique est illustré par les brevets US-3,201,491, WO 96/12542, EP-A-0 787 517 et US-3,268,605.

Dans un procédé de séparation par adsorption en contre-courant simulé ou en lit mobile simulé, on trouve obligatoirement :

- Un ensemble de lits d'adsorbant (ou de phase fixe) disposés en boucle fermée, le nombre total de lits est compris en général entre trois et vingt-quatre.

- Des moyens de connexion de chacun de ces lits avec les flux alimentant l'unité de séparation tels que par exemple solvant(s), charge(s) à séparer, reflux interne.

- Des moyens de connexion de chacun de ces lits avec les flux issus de l'unité de séparation tels que par exemple extrait(s), raffinat(s).

- Des moyens de connexion de chacun des lits avec le lit suivant (dans le sens de la circulation des fluides).

Suivant le type particulier de réalisation, on peut trouver soit un dispositif de recirculation de fluide entre le dernier et le premier lit (pompe ou compresseur), soit un dispositif permettant d'assurer l'interruption du flux entre deux lits successifs (vanne tout ou rien), soit un dispositif permettant de réguler le débit et/ou la pression à l'entrée de chaque lit.

Deux types de réalisations sont disponibles :

- Chaque lit est contenu dans un récipient indépendant et une ligne le relie au suivant. Dans ce cas, il est avantageux de venir raccorder sur cette ligne, une ligne indépendante par flux entrant et sortant. On rangera dans cette classe de réalisation le procédé AROMAX de TORAY Industries qui constitue un exemple de réalisation de grande taille. Bien que les lits individuels soient disposés dans une colonne unique, ils sont séparés par des tôles pleines, l'ensemble du fluide issu de chaque lit est collecté par une ligne qui sort de la colonne et qui y rentre, à nouveau, de manière à alimenter le lit suivant.

De manière plus générale sur les unités de petite taille, il est commode d'isoler chaque lit dans un récipient particulier et de le relier au lit suivant par une ligne.

Dans ce type de réalisation, il est aisé d'utiliser une ligne par flux entrant ou sortant et par lit, ce qui évite tout problème de contamination d'un flux par un autre.

Plusieurs lits sont contenus dans un seul récipient ou colonne et chacun des lits est séparé du suivant par un plateau distributeur qui doit remplir quatre fonctions :

- rassembler le fluide collecté à la fin du lit,

- prélever durant certaines phases du cycle une partie de ce fluide, telle que la composition de la partie prélevée soit identique à la composition de l'ensemble du fluide,

- injecter durant certaines phases du cycle un fluide extérieur dans le fluide interne et réaliser un mélange homogène en composition,

- distribuer le fluide à l'entrée du lit suivant.

Le procédé PAREX décrit dans le brevet US-2,985,589 montre comment il est possible par une vanne de relier au moins deux flux entrants et deux flux sortants séquentiellement vers chacun des lits contenant l'adsorbant.

Ce brevet montre clairement que chacun des distributeurs est relié par une seule ligne à une vanne qui connecte successivement chaque distributeur à la charge puis à l'extrait, puis au solvant, puis au raffinat.

Cette manière de procéder présente l'inconvénient de faire baisser considérablement les performances du procédé (pureté et rendement) puisque chaque flux se trouve ainsi contaminé par le contenu de la ligne commune au moment où l'on connecte un flux donné à un lit particulier.

À titre purement illustratif, on considère une colonne subdivisée en douze lits et fonctionnant de la manière suivante :

En période n° 1 du cycle (qui comprend 12 périodes), le solvant est injecté sur le lit n°1, l'extrait est prélevé du lit n° 3, la charge injectée sur le lit n° 7 et le raffinat est prélevé du lit n° 9. Au début de la seconde période du cycle, les points d'injection et de prélèvement sont décalés d'un lit et l'on trouve le solvant injecté sur le lit n° 2, l'extrait prélevé du lit n° 4, la charge injectée sur le lit n° 8 et le raffinat prélevé du lit n° 10. Le cycle se poursuit ainsi jusqu'à la douzième période où le solvant est injecté sur le lit n° 12, l'extrait est prélevé du lit n° 2, la charge est injectée sur le lit n° 6 et le raffinat est prélevé du lit n° 8.

À la fin de la première période, la ligne reliant le distributeur n° 1 à la vanne assurant la gestion des flux se trouve donc pleine de solvant. Au début de la quatrième période le raffinat est prélevé du lit n° 12, donc au moyen de la ligne ayant servi à l'injection de solvant au cours de la période 1. Pendant le temps nécessaire à l'évacuation du volume de cette ligne, on prélève du solvant au lieu de prélever du raffinat. Il en résulte donc une dilution inutile qui se traduit en fin de compte par une surconsommation de solvant donc à un surcoût opératoire. À la fin de la quatrième période, cette ligne se trouve pleine de raffinat. Au cours de la septième période la charge est injectée sur le lit n° 1. Pendant un certain temps on repousse du raffinat dans le lit n° 1 au lieu d'injecter de la charge. Il en résulte que le paraxylène de la charge subit une dilution par du raffinat. Comme la productivité de l'unité est proportionnelle à la concentration du paraxylène dans la charge, le résultat net est une baisse de productivité. À la fin de la septième période, la ligne se trouve pleine de charge. Au cours de la dixième période, l'extrait est prélevé du lit n° 12. Pendant le temps nécessaire au balayage de la ligne, on soutire de la charge au lieu de soutirer de l'extrait. Il en résulte une baisse de pureté très importante, puisque la teneur en paraxylène de la charge est de l'ordre de 20 % (donc 80 % d'impuretés). Cette contamination rend impossible l'obtention de paraxylène de haute pureté. À la fin de la dixième période, la ligne se trouve pleine d'extrait. Au début de la première période, le solvant repousse le contenu de la ligne dans l'adsorbeur au début de la zone de désorption du paraxylène (zone 1). Une partie de ce paraxylène va donc rester adsorbée sur la phase fixe, et être relarguée ultérieurement pour partie dans le flux de raffinat. Il en résulte donc une perte de rendement en paraxylène.

En résumé, les contaminations dues à l'emploi d'une ligne commune connectant chacun des quatre flux du procédé à l'entrée du plateau distributeur provoquent une augmentation de la consommation de solvant, une baisse de la productivité, une très forte baisse de la pureté et une baisse du rendement.

Bien qu'il soit connu que dans le procédé PAREX une injection intervienne entre le soutirage d'extrait et l'injection de charge, les deux seuls documents publiés sur ce sujet concernent pour l'un, l'injection d'un ou de deux reflux internes d'extrait ou de raffinat distillé situés soit entre l'extrait et la charge, soit entre la charge et le raffinat (Brevet US 3 761 533), et pour l'autre, l'injection d'un fluide de rinçage de nature indéterminée et en une position également indéterminée (brevet US-4,434,051), Le fait de réinjecter de l'extrait ou du solvant entre la charge et l'extrait résout uniquement le problème de la forte baisse de pureté.

Dans le procédé ÉLUXYL de la demanderesse, au lieu d'avoir recours à une seule vanne réalisant l'ensemble des connexions entre les différents flux et chacun des lits, on trouve une vanne tout ou rien par flux et par lit.

Bien que chacune de ces vannes soit située au plus près du lit qu'elle dessert, il reste à raccorder chaque distributeur à une vanne de solvant, une vanne d'extrait, une vanne de charge, une vanne de raffinat et éventuellement une vanne de reflux interne.

L'objet de l'invention est de remédier aux inconvénients de l'art antérieur.

De manière plus précise, l'invention concerne un dispositif de rinçage dans une unité de séparation d'une charge contenant un produit recherché, par adsorption en lit mobile simulé comprenant une pluralité de lits 10,11 d'un adsorbant, caractérisé en ce que chacun d'entre eux est raccordé à un organe de distribution 5 comportant une première et une deuxième lignes 2,1 de distribution de fluides, la première ligne 2 de distribution de chaque organe de distribution étant reliée soit à au moins une entrée 7 de charge et à au moins un soutirage 8 d'un effluent pauvre en produit recherché, soit à au moins une entrée 3 de solvant et à au moins un soutirage 4 d'un effluent riche en produit recherché, la deuxième ligne 1 étant reliée à au moins une entrée et à au moins un soutirage qui ne sont pas reliés à ladite première ligne 2, chaque entrée et chaque soutirage comportant une vanne tout ou rien 7a,8a,3a,4a, ladite première ligne 2 de distribution comportant une vanne de rinçage 9, l'ensemble des vannes de rinçage 9 relatives à l'ensemble des lignes de distribution 2 étant raccordé à des moyens de circulation 100,102 d'un fluide à déplacer.

Le dispositif, en outre, comporte un organe 50 de commande d'ouverture ou de fermeture des vannes de rinçage 9 et des vannes tout ou rien 3a,4a,7a,8a.

Les conditions opératoires de mise en oeuvre du dispositif et le choix de l'adsorbant peuvent être tels que l'effluent pauvre en produit recherché, par exemple le paraxylène provenant d'un mélange d'isomères en $C_8$ aromatiques, soit dans le raffinat (fraction la moins adsorbée) tandis que l'effluent riche en paraxylène est dans l'extrait (fraction la plus adsorbée). Mais on peut selon le brevet US-4,490,830 modifier l'adsorbant de telle façon que. le raffinat soit riche en produit recherché et l'extrait pauvre en produit recherché.

Selon une caractéristique du dispositif, les moyens de circulation du fluide comportent au moins une pompe 102 de circulation du fluide et au moins un moyen de contrôle 103,104 du débit de fluide circulant dans la première ligne 2.

Selon une autre caractéristique la deuxième ligne de distribution comporte une vanne de rinçage 19, l'ensemble des vannes de rinçage relative à l'ensemble des lignes de distribution 1 étant raccordé à des moyens de circulation 100b de fluide à déplacer similaires à ceux raccordés à la première ligne de circulation.

Par exemple, dans le cas où la première ligne de circulation est reliée à l'entrée de charge et au soutirage d'effluent pauvre en produit recherché, la deuxième ligne de circulation est reliée à l'entrée de solvant et au soutirage d'effluent riche en produit recherché. On évite alors grâce à la vanne de rinçage 19 et aux moyens de circulation 100b de trop diluer le produit recherché par du solvant et de réinjecter une petite quantité d'effluent riche en produit recherché au début de l'injection du solvant.

Un organe de commande peut être adapté à actionner l'ouverture et la fermeture de ces vannes de rinçage de manière synchronisée avec les autres opérations du procédé à des moments appropriés du cycle et des périodes le constituant.

Le procédé d'adsorption peut être à contre-courant simulé ou à co-courant simulé. Il est décrit dans les brevets suivants : US-2,985,589, US-4,498,991, US-5,422,007, EP-B- 531 191 incorporés comme références.

Le désorbant ou solvant peut être une phase liquide ou une phase supercritique, subcritique ou gazeuse. Dans ces conditions, par pompe de circulation de solvant, on entend aussi un compresseur.

L'invention concerne aussi l'utilisation du dispositif de rinçage dans un procédé de séparation d'une charge en au moins un de ses constituants pour rincer à chaque période, au niveau d'un lit donné le tronçon commun de volume v, situé sur au moins une ligne 2 de distribution entre l'organe de distribution 5 de fluides, les vannes tout ou rien 7a,8a d'entrée et de soutirage de fluides et la vanne de rinçage 9.

Ce procédé de séparation peut s'appliquer à la séparation de paraxylène à partir d'une charge d'hydrocarbures aromatiques à 8 atomes de carbone comprenant des xylènes, en vue de la préparation d'acide ou d'anhydride téréphtalique, un intermédiaire dans la synthèse des nylons, ou du téréphtalate de méthyle, un intermédiaire dans la synthèse de certaines matières plastiques

Il peut s'appliquer aussi à la séparation des diéthylbenzènes ainsi qu'à la séparation d'éthylbenzène, de normales et isoparaffines, d'oléfines, de sucres, et plus généralement aux séparations de mélanges de produits relevant de l'adsorption ou de la chromatographie par exemple, la séparation d'isomères optiques.

Il peut s'appliquer à la séparation du paradiéthylbenzène à partir d'un mélange de diéthylbenzènes, qui est un bon désorbant.

Selon une caractéristique du procédé, on peut soutirer le contenu du tronçon commun *v* relatif à la première ligne 2 de distribution de manière synchronisée avec un débit égal à $\frac{v}{t}$ pendant un temps *t* correspondant à une partie au moins de la période de permutation.

Selon une autre caractéristique, on peut aussi soutirer le contenu du tronçon commun *v'* relatif à la deuxième ligne 1 de distribution, de manière synchronisée avec un débit égal à $\frac{v'}{t}$ pendant un temps *t* correspondant à une partie au moins de la période de permutation.

On peut aussi privilégier à la fois la pureté de l'extrait et celle du raffinat en rinçant chaque ligne de distribution alimentant le plateau distributeur, respectivement par du desorbant et de la charge.

L'invention sera mieux comprise au vu des figures illustrant de manière schématique un dispositif, parmi lesquelles :

- la figure 1 montre un ensemble de moyens à mettre en oeuvre pour réaliser le rinçage du dispositif,

- la figure 2 représente de manière détaillée une variante du dispositif au niveau d'un des lits de l'adsorbeur.

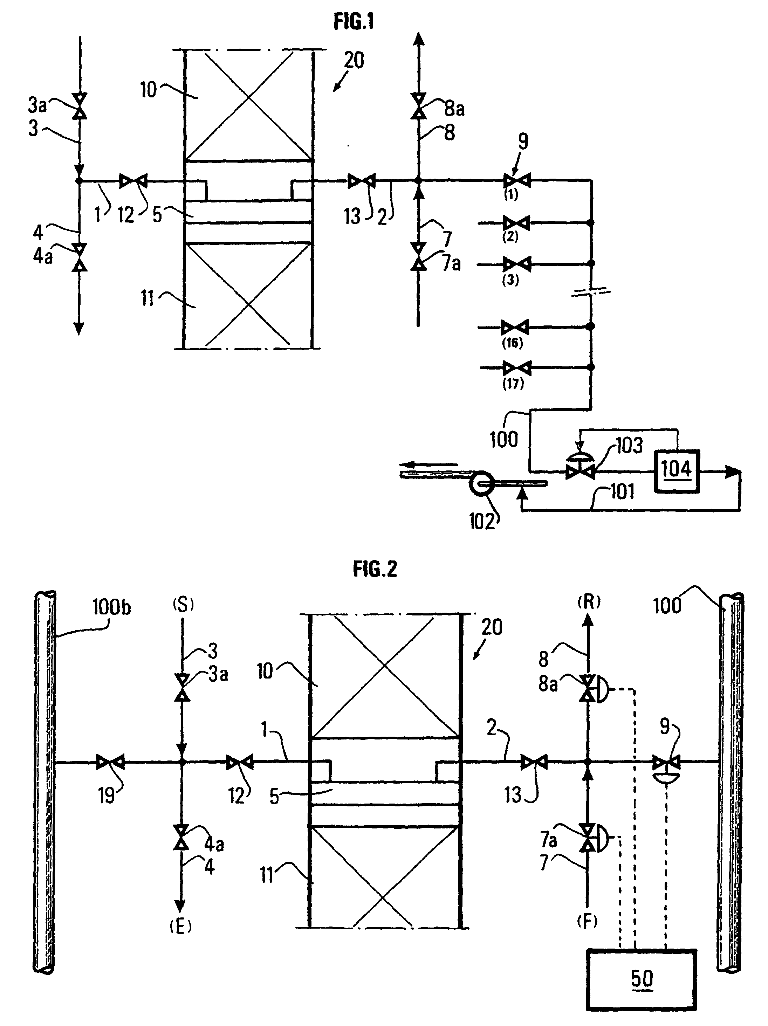

Selon les figures 1 et 2, un adsorbeur 20, localisé dans une ou plusieurs colonnes, contenant un adsorbant approprié comprend par exemple dix-sept lits 10,11. Chaque lit est connecté par un plateau distributeur 5 à une ligne 2 qui reçoit périodiquement une alimentation en charge 7, ou un soutirage de raffinat 8 pauvre en produit recherché contrôlé par des vannes 7a et 8a.

Une ligne 1 raccordée au plateau de distribution 5 est connectée à une ligne d'alimentation en solvant et à une ligne de soutirage d'un extrait riche en produit recherché.

La ligne 2 est par ailleurs reliée à une ligne de circulation 100 d'un fluide de rinçage (prélevé de l'adsorbeur), qui reçoit toutes les lignes 2 en provenance de l'ensemble des lits d'adsorbant 10, 11. Chaque ligne 2 est contrôlée par une vanne de rinçage 9 située entre les lignes d'alimentation ou de soutirage et la ligne 100. Une autre vanne 13 dite de block est située sur la ligne 2 entre les lignes d'alimentation ou de soutirage et le plateau distributeur 5 et permet d'isoler le lit particulier. Toutes ces vannes 9 sont connectées à un organe de commande d'ouverture ou de fermeture 50, qui peut aussi commander le fonctionnement de l'ensemble de toutes les vannes 7a, 8a, 13 du dispositif.

Par souci de simplification, (figure 1) les vannes de rinçage 9 numérotées de 1 à 17 correspondent aux 17 lits de l'adsorbeur. La ligne 100 de circulation est reliée par une ligne 101 via une vanne 103 à l'entrée d'une pompe d'alimentation 102 de charge, par exemple. Le débit dans la ligne 100 est contrôlé par la vanne de régulation 103 et un débitmètre 104.

Le dispositif ainsi décrit permet d'aspirer le contenu du tronçon de ligne 2 compris entre le plateau distributeur 5, les vannes 7a et 8a et la vanne de rinçage 9, qui est de la charge ou du raffinat. De cette manière, on évite tout risque de pollution de la charge ou du raffinat vers l'extrait.

Sur un même plateau distributeur 5, une ligne 1 comprenant une vanne de block 12 est raccordée aux lignes d'extrait 4 et de solvant 3 contrôlées respectivement par des vannes 4a et 3a.

La vanne de block 12 en amont du plateau distributeur 5 isole, sur la ligne 1, le lit d'adsorbant. Toutes les vannes correspondant à l'ensemble des plateaux distributeurs peuvent être contrôlées par la centrale de commande 50 qui commande leur ouverture ou leur fermeture.

Si l'on veut éviter de diluer inutilement l'extrait, on peut connecter cette ligne 1 (voir figure 2), à une autre ligne de circulation 100 b via une autre vanne de rinçage 19. Cette ligne de circulation 100 b est reliée à l'aspiration d'une pompe de solvant par exemple avec un débit contrôlé (non représentée sur la figure 2). L'ensemble des vannes 19 est contrôlé par la centrale de commandes (non représentée sur la figure).

Les inconvénients d'injecter du solvant et de soutirer de l'extrait par la ligne 1, et d'injecter de la charge et de soutirer du raffinat par la ligne 2 sans vanne de rinçage sont les suivants :

Lorsque l'on injecte du solvant dans la ligne 1 qui se trouve pleine d'extrait, il en résulte une perte de rendement modérée. Lorsque l'on soutire de l'extrait par la ligne 1, cette dernière se trouve pleine de solvant : il en résulte une dilution inutile qui se traduit par une surconsommation de solvant. Lorsque l'on injecte de la charge dans la ligne 2 elle se trouve pleine de raffinat, il en résulte une inutile dilution des constituants de la charge par du raffinat. Enfin, quand on soutire du raffinat par la ligne 2, la ligne se trouve pleine de charge : il en résulte une importante perte de rendement.

Le but de la vanne de rinçage 9 est donc de soutirer la charge contenue dans la ligne 2 juste avant de soutirer le raffinat de manière à ce que cette ligne soit déjà pleine de raffinat au moment où la vanne de raffinat va s'ouvrir. La charge contenue dans la ligne 2 et soutirée par la vanne de rinçage 9 est renvoyée à l'aspiration de la pompe 102 de charge au moyen des moyens de contrôle de débit 103 et 104 et de la ligne 101. Il est entendu que cette disposition a pour but de favoriser la pureté du constituant prélevé sous forme d'extrait puisque la ligne 1 est commune à l'extrait et au solvant. Si l'on souhaite favoriser la pureté du raffinat au lieu de celle de l'extrait on groupera sur la ligne 1 le solvant et le raffinat et sur la ligne 2, la charge, l'extrait et le rinçage. Lorsque l'on veut prélever le contenu de la ligne commune au flux de charge et de raffinat, on doit réaliser ceci de manière synchronisée avec les autres opérations se déroulant au cours de la période.

Lorsque l'on veut aspirer le bouchon de charge contenu dans le tronçon commun de la ligne 2 pendant la période qui précède juste le prélèvement de raffinat, on procède de la manière suivante :

Admettons qu'en période n° 1 du cycle, le raffinat soit prélevé du lit n° 12 (vanne n° 13 desservant la sortie du lit 12 et l'entrée du lit 13). On ouvre la vanne de rinçage n° 14, et le contenu du tronçon commun (de la charge) est évacué par les lignes 100 et 101 vers l'aspiration de la pompe de charge. On impose un débit supérieur ou égal $\frac{v}{t}$ pendant un temps inférieur ou égal à t de manière à ce que le volume commun soit balayé au moins une fois au cours de la période. Ce débit est régulé par la vanne 103 et le débitmètre 104.

À la fin de cette opération, le contenu du tronçon commun n'est plus de la charge mais du raffinat dilué et le débit moyen de charge est augmenté de $\frac{v}{t}$ sans surconsommation de charge, au moyen du bouchon de charge récupéré.

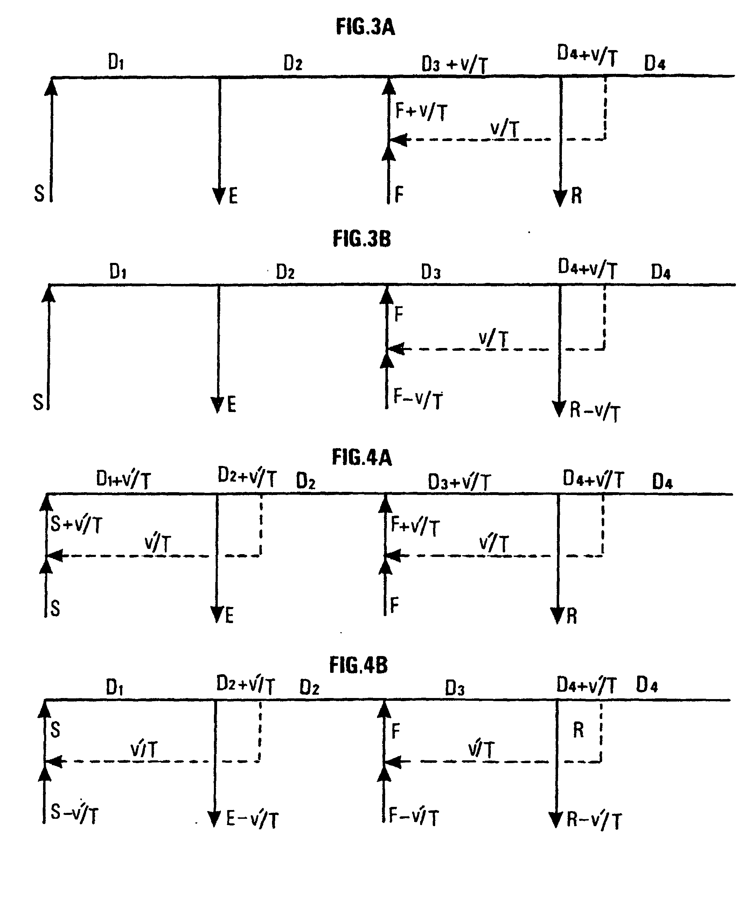

Du point de vue bilan des débits dans l'unité, on désire sauvegarder des débits aussi proches que possible de ceux du système idéal sans tronçon commun. On peut soit procéder comme en figure 3a où le débit D3 de la zone 3 et celui du début de la zone 4 sont augmentés de $\frac{v}{t}$. Cependant, une augmentation du débit en zone 3 provoque une perte en rendement. On préfère donc le schéma de la figure 3b où les débits nets de charge et de raffinat sont diminués de $\frac{v}{t}$. Par rapport au schéma idéal sans tronçon de ligne commun à la charge et au raffinat, la productivité est plus faible. Cependant, par rapport au schéma avec tronçon commun et sans rinçage de ligne, la productivité est maintenue puisque l'on évite la perte de rendement. La seule différence de débit interne par rapport au schéma idéal est que le premier lit de la zone 4 voit un débit légèrement supérieur, ce qui est de peu de conséquence.

Il est naturellement possible d'équiper chaque étage de deux vannes de rinçage de manière à résoudre en plus les inconvénients liés à ce que le solvant et l'extrait sont véhiculés par la même ligne. Une vanne de rinçage 19 est alors connectée sur la ligne 1 et un dispositif analogue à celui de la figure 1 est ajouté à l'unité. On récupère ainsi le solvant contenu dans le tronçon commun de la ligne 1 et on le renvoie vers l'aspiration de la pompe de solvant, de manière à réaliser une économie de solvant, ce qui est toujours favorable du point de vue des coûts opératoires.

Du point de vue du bilan des débits dans l'unité, il est évident pour l'homme de l'art que les figures 4a et 4b constituent une simple transposition des figures 3a et 3b. Cette opération sera effectuée en synchronisation avec les autres ouvertures de vannes.

Lorsque l'on veut aspirer le bouchon de solvant contenu dans le tronçon commun de la ligne 1 pendant la période qui précède juste le prélèvement d'extrait, on procède de la manière suivante :

Admettons qu'en période n° 1 du cycle, l'extrait soit prélevé du lit n° 4 (vanne n° 5 desservant la sortie du lit 4 et l'entrée du lit 5). On ouvre la vanne de rinçage n° 5, et le contenu du tronçon commun (du solvant) est évacué par la ligne 100b vers l'aspiration de la pompe de solvant. On impose un débit supérieur ou égal $\frac{v'}{t}$ pendant un temps inférieur ou égal à t de manière à ce que le volume commun soit balayé au moins une fois au cours de la période.

À la fin de cette opération, le contenu du tronçon commun n'est plus du solvant mais de l'extrait concentré et le débit moyen de solvant est augmenté de $\frac{v'}{t}$ sans surconsommation de solvant, au moyen du bouchon de solvant récupéré.

Du point de vue bilan des débits dans l'unité, on désire sauvegarder des débits aussi proches que possible de ceux du système idéal sans tronçon commun. On peut soit procéder comme en figure 4a où le débit de la zone 1 et celui du début de la zone 2 sont augmentés de $\frac{v'}{t}$. Cependant, on préfère le schéma de la figure 4b où les débits nets de solvant et d'extrait sont diminués de $\frac{v'}{t}$. Par rapport au schéma idéal sans tronçon de ligne commun au solvant et à l'extrait, la productivité est plus faible. Cependant, par rapport au schéma avec tronçon commun et sans rinçage de ligne, la productivité est maintenue puisque l'on évite la perte de rendement. La seule différence de débit interne par rapport au schéma idéal est que le premier lit de la zone 2 voit un débit légèrement supérieur, ce qui favorise la pureté.

**Revendications**

1. Dispositif de rinçage dans une unité de séparation d'une charge contenant un produit recherché, par adsorption en lit mobile simulé comprenant une pluralité de lits (10,11) d'un adsorbant, **caractérisé en ce que** chacun d'entre eux est raccordé à un organe de distribution (5) comportant une première et une deuxième lignes (2,1) de distribution de fluides, la première ligne (2) de distribution de chaque organe de distribution étant reliée soit à au moins une entrée (7) de charge et à au moins un soutirage (8) d'un effluent pauvre en produit recherché, soit à au moins une entrée (3) de solvant et à au moins un soutirage (4) d'un effluent riche en produit recherché, la deuxième ligne (1) étant reliée à au moins une entrée et à au moins un soutirage qui ne sont pas reliés à ladite première ligne (2), chaque entrée et chaque soutirage comportant une vanne tout ou rien (7a,8a,3a,4a), ladite première ligne (2) de distribution comportant une vanne de rinçage (9), l'ensemble des vannes de rinçage (9) relatives à l'ensemble des lignes de distribution (2) étant raccordé à des moyens de circulation (100,102) d'un fluide à déplacer; le dispositif étant en outre **caractérisé en ce qu'**il comporte un organe (50) de commande d'ouverture ou de fermeture des vannes de rinçage (9) et des vannes tout ou rien (3a,4a,7a,8a).

2. Dispositif selon la revendication 1 dans lequel les moyens de circulation (100,102) comportant au moins une pompe (102) de circulation du fluide et au moins un moyen de contrôle (103,104) du débit de fluide circulant dans la ligne.

3. Dispositif selon les revendications 1 ou 2, dans lequel la deuxième ligne (1) de distribution comporte une vanne de rinçage (19), l'ensemble des vannes de rinçage relatives à l'ensemble des lignes de distribution (1) étant raccordé à des moyens de circulation (100b) de fluide à déplacer et dans lequel un organe de commande est adapté à actionner l'ouverture ou la fermeture desdites vannes de rinçage (19).

4. Utilisation du dispositif selon l'une des revendications 1 à 3 dans un procédé de séparation d'une charge en au moins un de ses constituants pour rincer à chaque période, au niveau d'un lit donné le tronçon commun de volume v, situé sur au moins une ligne (2) de distribution entre l'organe de distribution (5) de fluides, les vannes tout ou rien (7a,8a) d'entrée et de soutirage de fluides et la vanne de rinçage (9).

5. Utilisation selon la revendication 4 dans laquelle on soutire le contenu du tronçon commun de volume v relatif à la ligne (2) de distribution, de manière synchronisée et avec un débit égal à $\frac{v}{t}$ pendant un temps t correspondant à une partie au moins de la période de permutation.

6. Utilisation selon la revendication 4 ou 5 dans laquelle on soutire le contenu du tronçon commun de volume v' relatif à la ligne (1) de distribution, de manière synchronisée et avec un débit égal à $\frac{v'}{t}$ pendant un temps $t$ correspondant à une partie au moins de la période de permutation.

7. Utilisation selon l'une des revendications 4 à 6, dans lequel le volume dudit tronçon commun est rincé au moins une fois.

8. Utilisation selon l'une des revendications 4 à 7, dans laquelle la charge contient un mélange de xylènes.

**Patentansprüche**

1. Vorrichtung zum Flushen oder Spülen in einer Einheit zum Trennen einer ein gesuchtes Produkt enthaltenden Charge, durch Adsorption im simulierten beweglichen Bett, eine Vielzahl von Betten (10, 11) eines Adsorptionsmittels enthaltend, **dadurch gekennzeichnet, dass** ein jedes hiervon mit einem Verteilerorgan (5), das eine erste und eine zweite Leitung (2, 1) zur Verteilung von Fluiden umfasst, verbunden ist, wobei die erste Verteilerleitung (2) jedes Verteilerorgans mit entweder wenigstens einem Eintritt (7) für die Charge und wenigstens einem Abzug (8) für einen an dem gesuchten Produkt verarmten Abstrom oder mit wenigstens einem Eintritt (3) für das Lösungsmittel und wenigstens einem Abzug (4) für ein am nachgesuchten Produkt angereicherten Abstrom verbunden ist, die zweite Leitung (1) an wenigstens einen Eingang und wenigstens einen Abzug, die nicht mit dieser ersten Leitung (2) verbunden sind, angeschlossen ist, jeder Eingang und jeder Abzug ein JA/NEIN-Ventil (7a, 8a, 3a, 4a) umfasst, die erste Verteilerleitung (2) ein Flushventil (9) umfasst und die Gruppe von Flushventilen bezüglich der Gruppe von Verteilerleitungen (2) an Zirkulationsmittel (100, 102) eines zu verdrängenden Fluids angeschlossen ist, wobei die Vorrichtung sich im übrigen dadurch auszeichnet, dass sie ein Organ (50) zur Steuerung des Öffnens oder Schließens der Flushventile (9) und der JA/NEIN-Ventile (3a, 4a, 7a, 8a) umfasst.

2. Vorrichtung nach Anspruch 1, bei der die Zirkulationsmittel (100, 102) wenigstens eine Pumpe (102) für die Fluidzirkulation und wenigstens ein Mittel (103, 104) zur Durchsatzregelung des in der Leitung zirkulierenden Fluids umfassen.

3. Vorrichtung nach Anspruch 1 oder 2, bei der die zweite Verteilerleitung (1) ein Flushventil (19) umfasst, wobei die Gruppe von Flushventilen bezüglich der Gruppe von Verteilerleitungen (1) an Zirkulationsmittel (100b) des zu verdrängenden Fluids angeschlossen ist, und bei der ein Steuerorgan so ausgelegt ist, dass es das Öffnen oder das Schließen dieser Flushventile (19) auslöst.

4. Verwendung der Vorrichtung nach einem der Ansprüche 1 bis 3 bei einem Verfahren zur Trennung einer Charge in wenigstens einen ihrer Bestandteile, um in jeder Periode hinsichtlich eines gegebenen Bettes den gemeinsamen Abschnitt vom Volumen v zu spülen, der sich auf wenigstens einer Verteilerleitung (2) zwischen dem Verteilerorgan (5) für die Fluide, den Eintritts- und Abzugs-JA/NEIN-Ventilen (7a, 8a) für die Fluide sowie dem Flushventil (9) befindet.

5. Verwendung nach Anspruch 4, bei der man den Inhalt des gemeinsamen Abschnitts vom Volumen v der Verteilerleitung (2) synchronisiert und mit einem Durchsatz gleich v/t während einer Zeit t abzieht, die wenigstens einem Teil der Austauschperiode entpricht.

6. Verwendung nach Anspruch 4 oder 5, bei der man den Inhalt des gemeinsamen Abschnitts vom Volumen v'/t bezüglich der Verteilerleitung (1) synchronisiert und mit einem Durchsatz v'/t während einer Zeit t entsprechend wenigstens einem Teil der Austauschperiode abzieht.

7. Verwendung nach einem der Ansprüche 4 bis 6, bei der das Volumen dieses gemeinsamen Abschnittes wenigstens einmal gespült wird.

8. Verwendung nach einem der Ansprüche 4 bis 7, bei der die Charge ein Gemisch aus Xylolen enthält.

**Claims**

1. A flushing apparatus in a unit for separating a desired product from a feed using simulated moving bed adsorption, comprising a plurality of beds (10, 11) and an adsorbent, **characterized in that** each bed is connected to a distribution means (5) comprising a first and a second fluid distribution line (2,1), the first distribution line (2) of each distribution means being connected either to at least one inlet (7) for a feed and to at least one outlet (8) for an effluent which is depleted in the desired product, or to at least one solvent inlet (3) and to at least one outlet (4) for an effluent which is rich in the desired product, the second line (1) being connected to at least one inlet and to at least one outlet which are not connected to said first line (2), each inlet and outlet comprising an on-off valve (7a, 8a, 3a, 4a), said first distribution line (2) comprising a flushing valve (9), all of the flushing valves (9) relating to all of the distribution lines (2) being connected to means (100, 102) for circulating a fluid to be displaced; the apparatus being further **characterized in that** it comprises a control means (50) for opening or closing the flushing valves (9) and the on-off valves (3a, 4a, 7a, 8a).

2. An apparatus according to claim 1, in which the circulation means (100, 102) comprise at least one pump (102) for circulating fluid and at least one means (103, 104) for controlling the flow rate of fluid circulating in the line .

3. An apparatus according to claim 1 or claim 2, in which the second distribution line 1 comprises a flushing valve (19), all of the flushing lines relating to all of the distribution lines (1) being connected to means (100b) for circulating fluid to be displaced, and in which a control means is adapted to open or close said flushing valves (19).

4. Use of an apparatus according to any one of claims 1 to 3, in a process for separating a feed into at least one of its constituents, to flush during each period at a given bed, a common section with volume v located in at least one distribution line (2) between the fluid distribution line (5), the on-off valves (7a, 8a) at the fluid inlet and outlet, and the flushing valve (9).

5. Use according to claim 4, in which withdrawal of the contents of a common section with volume *v* relating to the first distribution line (2) is synchronised and at a flow rate of *v/t* for a time *t* corresponding to at least a portion of the permutation period.

6. Use according to claim 4 or claim 5, in which withdrawal of the contents of the common section with volume *v'* relating to the second distribution line (1) is synchronised and at a flow rate of *v'/t* for a time *t* corresponding to at least a portion of the permutation period.

7. Use according to any one of claims 4 to 6, in which the volume of said common section is flushed at least once.

8. Use according to any one of claims 4 to 7, in which the feed contains a mixture of xylenes.

**FIG.1**

**FIG.2**

### FIG.3A

### FIG.3B

### FIG.4A

### FIG.4B